# EUROPEAN PATENT SPECIFICATION

(11) **EP 2 647 140 B1**
(45) Date of publication and mention of the grant of the patent: **07.01.2015**
(21) Application number: 11794673.1
(22) Date of filing: 29.11.2011
(51) Int. Cl.: H04B 10/2575, H04B 10/2581

(54) **SYSTEM FOR SIGNALS INDOOR DISTRIBUTION ON OPTICAL FIBER**
SYSTEM ZUR SIGNALINNENVERTEILUNG AUF EINER GLASFASER
SYSTÈME POUR UNE DISTRIBUTION INTÉRIEURE DE SIGNAUX SUR UNE FIBRE OPTIQUE

(30) Priority: 29.11.2010 ES 201031755
(43) Date of publication of application: 09.10.2013
(73) Proprietor: Telefónica, S.A., 28013 Madrid (ES)
(72) Inventor: CUCALA GARCIA, Luis, E-28013 Madrid (ES); ORTEGO MARTINEZ, Eduardo, E-28013 Madrid (ES)
(74) Representative: Carpintero Lopez, Francisco
(86) International application number: PCT/EP2011/071266
(87) International publication number: WO 2012/072626

(56) References cited:
- US-A1- 2009 148 160
- KOONEN A M J ET AL: "Advanced Technologies for Service-Integrated Optical In-Building Networks", TRANSPARENT OPTICAL NETWORKS, 2007. ICTON '07. 9TH INTERNATIONAL CONFERENCE ON, IEEE, PI, 1 July 2007 (2007-07-01), pages 122-125, XP031130464, ISBN: 978-1-4244-1248-8
- OLAF ZIEMANN ET AL: "Potential of High Speed, Short Distance Optical Data Communication on Large Diameter Optical Fibers", 1ST ELECTRONICS SYSTEMINTEGRATION TECHNOLOGY CONFERENCE, IEEE, PI, 1 September 2006 (2006-09-01), pages 409-414, XP031008408, ISBN: 978-1-4244-0552-7
- KOONEN A M J ET AL: "Radio-Over-MMF Techniques-Part II: Microwave to Millimeter-Wave Systems", JOURNAL OF LIGHTWAVE TECHNOLOGY, IEEE SERVICE CENTER, NEW YORK, NY, US, vol. 25, no. 15, 1 August 2008 (2008-08-01), pages 2396-2408, XP011236433, ISSN: 0733-8724
- GASULLA I ET AL: "Simultaneous baseband and radio over fiber signal transmission over a 5 km MMF link", MICROWAVE PHOTONICS, 2008. JOINTLY HELD WITH THE 2008 ASIA-PACIFIC MICROWAVE PHOTONICS CONFERENCE. MWP/APMP 2008. INTERNATIONAL TOPICSL MEETING ON, IEEE, PISCATAWAY, NJ, USA, 9 September 2008 (2008-09-09), pages 209-212, XP031358074, ISBN: 978-1-4244-2168-8
- YANG H ET AL: "WiMedia-compliant UWB transmission over 1 mm core diameter plastic optical fibre", THE INSTITUTION OF ENGINEERING AND TECHNOLOGY. JOURNAL,, vol. 46, no. 6, 18 March 2010 (2010-03-18) , pages 434-436, XP006035268, ISSN: 1350-911X, DOI: 10.1049/EL:20100188

## Description

### TECHNICAL FIELD

The present invention relates generally to a method and system for signals indoor distribution and more particularly to a method and system for efficiently distributing Ethernet and wireless signals using plastic optical fibre.

### DESCRIPTION OF THE PRIOR ART

Telecom operators currently offer services supported on radio signals that must be distributed indoor through the customer's premises. One example of these radio signals are broadcast DVB-T (Digital Video Broadcasting-Terrestrial) signals sent up to the customer's premises (by means of Fiber or other telecommunication means) to the Home access network. Another examples are mobile broadband radio interfaces like UMTS, HSPA, LTE (Long Term Evolution), that can also be sent up to the customer's premises by means of the Fiber to the Home access network, or picked up from the air interface (Public Land Mobile Network macrocells) at some point within the customer's premises.

The common techniques for the indoor distribution of these radio signals, in order to make it possible that they reach the final equipment where they will be used (a TV set or a mobile phone for example) are basically two; distribution of the signals within the customer's premises by means of a coaxial cable, or wirelessly transmitting the signals within the customer's premises. Coaxial cable solutions have important drawbacks, as they require drilling indoor walls and a costly deployment of the cable, making it unprofitable for the service provider and inconvenient for the final customer. On the other hand, wireless solutions do not require any cabling, but in many occasions they cannot ensure a full coverage of the customer's premises, and are prone to interference and spectrum scarcity.

Some examples of these solutions are:
- An ONT (Optical Network Terminal) that receives a DVB-T multiplex, modulated in a specific optical wavelength, from the Fiber to the Home access network, and feeds this DVB-T radiofrequency multiplex to a coaxial cable network for its indoor distribution to some TV sets.
- An ONT that receives a DVB-T multiplex, modulated in a specific optical wavelength, from the Fiber to the Home access network, and transmits some of the DVB-T channels in the ISM 5 GHz band.
- A radiofrequency repeater, that picks up a mobile broadband radio signal in some favorable location of the customer's premises, like a window, and amplifies and re-radiates the signal indoors, in order to provide indoor mobile broadband coverage.

On the other hand, there are also indoor solutions for the distribution of digital data, for example Ethernet-like Local Area Networks, that cannot support the distribution of any analog radio signal in its native form, that is, signals whose content may be digital but the content is transmitted through an analog signal (phase or amplitude modulated). These type of signals cannot directly distributed by this Local Area Networks; they must be firstly demodulated, the digital content extracted and then transmitted through the Local Area Network. Some examples of these solutions are:
- A Local Area Network supported on coaxial cable, UTP (Unshielded Twisted Pair) cable, or Plastic Optical Fiber (POF) cable.
- A Local Area Network supported on the mains power supply (i.e. 220 v power cables), making use of PLC (Power Line Communications) technology.
- A Local Area Network supported on a wireless technology, like Wi-Fi IEEE 802.11

In the specific field of the indoor optical fiber distribution technology, the research state of the art is, for example as follows:
- Project FP7 BONE (Building the Future Optical Network in Europe) (http://www.ict-bone.eu/portal/landing_pages/index.html) FP7-ICT-2007-1 216863, working in fiber optical networks. The public report "Report on Y2 activities and new integration strategy", distributed on 15/01/2010, some relevant activities for this invention are described:
   ∘ In section 4.8 some Radio on Fiber activities are described, for single mode and multi mode fibers, but no Radio on Fiber for Plastic Optical Fiber activity is described.
   ∘ In section 4.9 se some activities on Plastic Optical Fiber are described, but only for digital communications.
- There are some working groups, for example DTU Fotonik (Department of Photonics Engineering, Technical University of Denmark), who have published some Works about digital signals transmission on fiber. For example, in the paper "5 GHz 200 Mbit/s Radio Over Polymer Fiber Link with Envelope Detection at 650 nm Wavelength". Communication Conference, OFC'09, San Diego, California, U.S.A. 2009, it is described a system where a 200 Mbps signal modulates a 5 GHz radio carrier. However, when the modulated 5 GHz modulates a RC-LED, it works as a low pass filter, rejecting the 5 GHz carrier and transmitting only the 200 Mbps signal.
- Other paper from the same group "Convergencia de sistemas de comunicación ópticos e inalámbricos", Sociedad Española de Óptica, Óptica Pura y Aplicada 42 (2) 83-81 (2009), apartados 4 describes some radio on Fiber options on silica fiber, but the Plastic Optical Fiber is not taken into account.
- The paper "Advanced Technologies for Service-Integrated Optical In-Building Networks", TRANSPARENT OPTICAL NETWORKS, 2007. ICTON '07. 9TH INTERNATIONAL CONFERENCE ON, IEEE, PI, 1 July 2007 (2007-07-01), pages 122-125, XP031130464, ISBN: 978-1-4244-1248-8 by KOONEN A.M.J. ET AL, discloses low-cost in-home optical fibre communications techniques encompassing techniques for service integration, for high speed data transfer over highly dispersive polymer optical fibre and for dynamically providing high capacity wireless services over fibre.
- The paper "Potential of High Speed, Short Distance Optical Data Communication on Large Diameter Optical Fibres", 1ST ELECTRONICS SYSTEM INTEGRATION TECHNOLOGY CONFERENCE, IEEE, PI, 1 September 2006 (2006-09-01), pages 409-414, XP031008408, ISBN: 978-1-4244-0552-7 by OLAF ZIEMANN ET AL describes optical communications solutions, and more specifically it discloses different Polymer Optical Fibres and Polymer Clad Silica fibres which are used for bit rates of up to 2.5 Gbit/s with optimized components.
- The paper "Simultaneous baseband and radio over fiber signal transmission over a 5 km MMF link", MICROWAVE PHOTONICS, 2008. JOINTLY HELD WITH THE 2008 ASIA-PACIFIC MICROWAVE PHOTONICS CONFERENCE. MWP/APMP 2008. INTERNATIONAL TOPICSL MEETING ON, IEEE, PISCATAWAY, NJ, USA, 9 September 2008 (2008-09-09), pages 209-212, XP031358074, ISBN: 978-1-4244-2168-8 by GASULLA I. ET AL describes a technique for in-building optical communication networks which allows the simultaneous transmission of high-frequency subcarrier multiplexed CATV channels and 2.5 Gbit/s error-free digital through a multimode silica fibre link.
- The paper "Radio-Over-MMF Techniques-Part II: Microwave to Millimeter-Wave Systems", JOURNAL OF LIGHTWAVE TECHNOLOGY, IEEE SERVICE CENTER, NEW YORK, NY, US, vol. 25, no. 15, 1 August 2008 (2008-08-01), pages 2396-2408, XP011236433, ISSN: 0733-8724 by KOONEN A. M. J. ET AL describes an optical frequency multiplying technique for in-building optical communication networks. It can convey high data rates in comprehensive modulation formats on multiple-GHz carriers in multimode fibre networks.
- The paper "WiMedia-compliant UWB transmission over 1 mm core diameter plastic optical fibre", THE INSTITUTION OF ENGINEERING AND TECHNOLOGY. JOURNAL,, vol. 46, no. 6, 18 March 2010 (2010-03-18), pages 434-436, XP006035268, ISSN: 1350-911X, DOI: 10.1049/EL20100188 by YANG H. ET AL discloses a WiMedia-compliant UWB transmission system over graded-index optical fibre using low-cost transceivers.

Taking into account this state of the art analysis, it has been stated that there is no implementation, either commercial or at the research status, for the distribution of analog radio signals (e.g DVB-T, HSPA, LTE) on Plastic Optical Fiber, and there is not implementation that can share a Plastic Optical Fiber between the distribution of analog radio signals and the support of an Ethernet-type Local Area Network that transports digital data.

In patent application P201030924, a section of POF fiber is used to connect an ONT with a DVB-T transmitter in the 5 GHz band, in order to locate this transmitter in the most suitable place within the customer's premises. The architecture of patent application P201030924 is shown in the figure 1.

In this figure, the system (100), includes an Optical Network Termination (ONT) (101) that is connected to a telecom operator network through an access network (107). The ONT provides at its output a DVB-T multiplex (106) which is fed to an optical extender (105), which selects some of the DVB-T radiofrequency channels and convert them to an optical format, and then transmits them through a plastic optical fiber (108). A 5 GHz DVB-T transmitter (109) receives the optically modulated DVB-T signals from the plastic optical fibre, converts them to an electric format, and wirelessly transmits them in the 5 GHz band to the customer equipments (102). These equipments are designed to provide to the final equipments (103) at least a telecommunication service through a certain interface (104).

The optical extender includes an analog tuner that selects some of the radiofrequency channels in the DVB-T multiplex and converts them to an intermediate frequency, which modulates an optical source. The architecture and detailed implementation of patent application P201030924 are designed to support only DVB radiofrequency signals and cannot support any other signals, like baseband digital data (as the present invention does).

The present invention is a more general solution, as it makes it possible to share the POF fiber between a Local Area Network and the analog radio distribution, supporting both the distribution of mobile broadband radio signals and digital terrestrial television signals.

Different approaches can be found where Ethernet and Radio Frequency signals are transmitted over the same network.

The patent US20040244049 describes a system where the Ethernet signals are multiplexed with Radio Frequency signals but converting these radio signals to a digital format, and the transmission media that is used is coaxial cable.

The patent US20060291863A1 [10] describes another solution but using a Mach-Zehnder modulator and a laser diode over single mode fibre (SMF), where the bandwidth limitations are not an issue to take into account, because the single mode fibre can provide a bandwidth which is several orders of magnitude higher than that of the plastic optical fibre. This solution can only be applied to single mode fibre and not for plastic fibre, because the Mach_Zehnder modulator does not work with plastic fibre. This type of modulator needs a monochromatic light source which cannot be used with plastic fibre and in the other hand, the plastic fibre needs a LED source with cannot be used with the Mach_Zehnder modulator.

The patent Application US2009/0148160 discloses an optical diplexer module which comprises a multiplexing unit multiplexing RF signals and a wideband digital signal having a baseband bandwidth to output a single multiplexed signal; an E-O converter converting the multiplexed signal into an optical signal and externally outputting the optical signal; and an O-E converter converting an externally received optical signal into an electric signal and outputting the electric signal. Similarly to existing optical transceivers, the optical diplexer module can provide TPS and MPS services using only two optical wavelengths for upstream and downstream signals.

As a summary, current technology and equipment suffer the following limitations:
- Coaxial cable cannot be installed in the customer's premises ducts used for ac power distribution, due to the hazard of electrical discharge. Plastic Optical Fiber can be installed in the customer's premises ducts used for ac power distribution, as the POF fiber is not conducting, but current solutions only support data communications.
- There is no networking solution based on Plastic Optical Fiber that can support simultaneously baseband digital data and analog radio signals.
- Wireless indoor distribution systems, like Wi-Fi IEEE 802.11, are designed for the distribution of digital data, but cannot transport native analog radio signals like DVB-T or HSPA, that is, these type of signals as DVB-T or HSPA should be demodulated and the digital content extracted to be transported through the wireless indoor distribution system.
- Wireless indoor distribution systems, like Wi-Fi IEEE 802.11, cannot ensure the full wireless coverage of the customer's premises.
- Mobile broadband indoor wireless coverage solutions rely on repeaters that pick up a mobile broadband radio signals and re-amplify them, but they cannot ensure the full mobile broadband coverage of the customer's premises.

There are no solutions for the distribution of analog radio signals within the customer's premises, compatible with the simultaneous transport of baseband digital data, ensuring that the radio signal can be distributed up to every device where they are needed, without deploying cables that require drilling walls, regardless the spectrum availability or a limited wireless coverage.

### SUMMARY OF THE INVENTION

The present invention solves the aforementioned problems proposing a system which simultaneously distributes the baseband digital data and the analog radiofrequency signals provided by a radio access node in an indoor environment by means of a Plastic Optical Fibre (POF) network.

The main advantage of this invention is that it makes it possible to share a Plastic Optical Fiber infrastructure between a Local Area Network for data digital transmission, and the distribution of wireless radiofrequency signals, in particular DVB broadcast signals and Mobile Broadband signals like UMTS or LTE. In this way, a telecom operator may use a pre-existing Plastic Optical Fiber infrastructure for the distribution of its wireless services. An important advantage of a Plastic Optical Fiber infrastructure is that it can be deployed making use of the mains supply ducts, something that is forbidden in the case of copper cables like Category 5 UTP cables. There are already suppliers of Local Area Networks supported on POF fiber, so the invention can take advantage of existing deployments, or improve the performance of new POF-based Ethernet deployments thanks to the possibility of distributing simultaneously digital TV broadcast signals and Mobile Broadband signals.

In a first aspect the present invention proposes a system for simultaneous indoor distribution of baseband digital signals and radiofrequency signals, the system comprising:

At least a radiofrequency transmission-reception module configured for transmitting radiofrequency signals to an Optical Head Node and optionally receiving uplink radiofrequency signals from the Optical Head Node

Where the Optical Head Node called Hybrid Optical Head Node, comprises:
- At least an analog tuner 907, 1007 configured for selecting a frequency channel to filter the radiofrequency signal and converting the filtered signal to an intermediate frequency
- A baseband digital transmission-reception module 905, 1005 configured for transmitting and receiving baseband digital signals
- A multiplexer module configured for multiplexing the baseband digital signal and the radiofrequency signal converted to intermediate frequency by the analog tuner and sending the multiplexed signal for transmission to an optical transmitter/receiver.
- An optical transmitter/receiver configured for transmitting and receiving signals through a plastic optical fibre link

At least a Switch/Hub node called Hybrid Switch/Hub, comprising:
- At least an optical transmitter/receiver configured for transmitting and receiving signals through a plastic optical fibre link
- At least a radiofrequency transmission-reception module 1104, 1204 configured for transmitting and receiving the radiofrequency signals.
- A downlink regenerator 1205 configured for regenerating the radio frequency signal and sending them to a downlink multiplexer module.
- At least a downlink frequency demultiplexer 1103, 1203 configured for receiving a signal from an optical receiver 1102, 1202, separating the baseband digital from the radiofrequency signal and sending the baseband digital signals to the baseband digital transmission-reception module 1106, 1206 and the radiofrequency signals to the radiofrequency transmission-reception module respectively 1104, 1204 or to the downlink regenerator 1105, 1205.
- A baseband digital transmission-reception module 1006, 1206 configured for transmitting and receiving baseband digital signals, and for receiving the baseband digital signal from the frequency demultiplexer and sending them to a baseband digital terminal or to the downlink multiplexer module.
- A downlink addition module configured for multiplexing the baseband digital signal and the regenerated radiofrequency signals and sending them to an optical transmitter 1210 for transmission to another Hybrid Switch/Hub.

The system further comprising a multimode plastic optical fibre network which connects the Hybrid Optical Head Node with an Hybrid Switch/Hub and an Hybrid Switch/Hub with the Hybrid Optical Head Node or with another Hybrid Switch/Hub.

Further details of the systems are described in the dependent claims.

For a more complete understanding of the invention, its objects and advantages, reference may be had to the following specification and to the accompanying drawings.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:

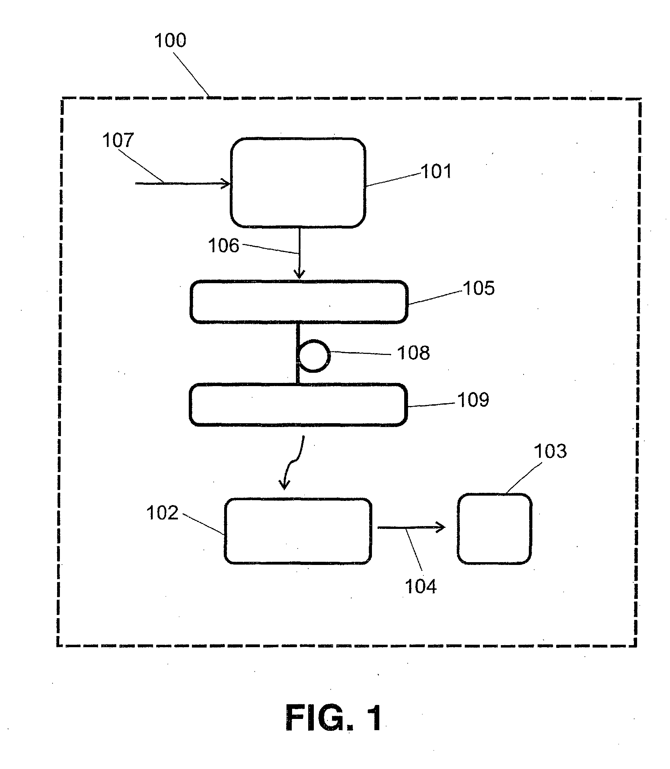

Figure 1 represents a block diagram of a prior art exemplary invention.
Figure 2 shows the basic arquitecture of a preferred embodiment of the present invention.
Figure 3 shows a graphical representation of the power spectrum of an Ethernet signal.
Figure 4a shows a graphical representation of the power spectra of an Ethernet signal, a DVB-T signal and a Mobile Broadband signal before conversion to IF.
Figure 4b shows a graphical representation of the power spectrum of an Ethernet signal multiplexed with an IF DVB-t signal and an IF Mobile Broadband signal before conversion to IF.
Figure 5 represents a block diagram of the system when multiplexing and demultiplexing an Ethernet signal and a DVB-T signal in the downlink.
Figure 6 represents a block diagram of the system when multiplexing and demultiplexing an Ethernet signal and a Mobile Broadband signal in the downlink.
Figure 7 represents a block diagram of the system when multiplexing and demultiplexing an Ethernet signal and a Mobile Broadband signal in the uplink.

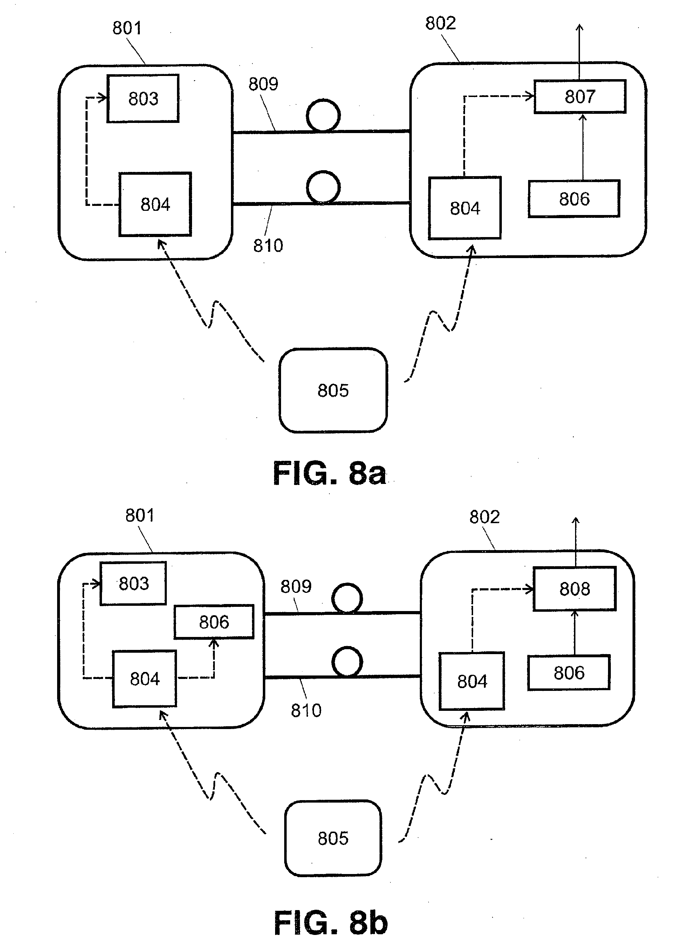

Figure 8a represents a block diagram of the Hybrid Optical Head and Hybrid Switch/hube control in the cases of DVB-T signals.
Figure 8b represents a block diagram of the Hybrid Optical Head and Hybrid Switch/hube control in the case of Mobile Broadband signals.
Figure 9 represents a block diagram of the Hybrid Optical Head in the case of DVB-T signals.
Figure 10 represents a block diagram of the Hybrid Optical Head in the case of Mobile Broadband signals.
Figure 11 represents a block diagram of the Hybrid Switch/Hub in the case of DVB-T signals.
Figure 12 represents a block diagram of the Hybrid Switch/Hub in the case of Mobile Broadband signals.

Corresponding numerals and symbols in the different figures refer to corresponding parts unless otherwise indicated.

### DETAILED DESCRIPTION OF THE INVENTION

The present invention disclose a system to simultaneously distribute the baseband digital data and the radiofrequency signals provided by a radio access node, which can be at the same time an Optical Network Termination (ONT) in an indoor environment by means of a Plastic Optical Fibre (POF) network.

Particularly, a Hybrid Optical Head (201) receives base band digital data (e.g. Ethernet traffic) 202 to/from the radio access node or ONT 204, a broadcast multiplex 203 (e.g. DVB-T, VHF/UHF) from the radio access node or ONT, and Mobile Broadband radio signals (206) from/to a Mobile Broadband transceiver (205), and multiplexes all these sources in a single POF fibre (207), which can be connected to one or more Hybrid Switch/Hubs (208). The Hybrid Switch/Hubs can provide baseband digital data to devices like personal computers (209), radiate Mobile Broadband radio signals, provide DVB radiofrequency signals to a TV set (210), radiate DVB radiofrequency signals in the 5 GHz band (211), or communicate with other Hybrid Switch/Hubs.

The invention makes use of an existing or specific-purpose Plastic Optical Fiber (POF) network in the customer's premises. In the case that a new Plastic Optical Fiber network must be deployed, it can be installed in the same ducts that the 220 v ac power lines. The Plastic Optical Fiber network can support simultaneously baseband digital data corresponding to an Ethernet Local Area Network, and/or analog radio broadcast signals like DVB-T or DVB-T2, and/or mobile broadband signals like HSPA or LTE.
The broadcast signals are sent to the customer's premises by means of the Fiber to the Home access network, making use of a specific optical wavelength modulated with the broadcast signals.

The mobile broadband signals can be picked up from the Public Land Mobile Network air interface at some favorable location within the customer premises.
The broadcast signals and the mobile broadband signals are frequency multiplexed with the Ethernet data. Frequency conversions and frequency filtering are implemented in order to multiplex the radio signals and the Ethernet digital data.

The new analog multiplex, that includes the Ethernet data, and/or the broadcast signals, and/or the broadband mobile signals, modulates an optical source like a LED or a laser, and the optical modulated output is inserted in the Plastic Optical Fiber. The preferred embodiment of this invention uses PMMA fiber, but it is not precluded the use of any other type of Plastic Optical Fiber.

The multiplex formation process and the optical source modulation is performed in an ONT (Optical Network Termination), or in a separate box (Hybrid Optical Head) that can be connected to the ONT.

Once transmitted through the POF fiber, the optically modulated signal is detected in a so called *Hybrid Switch*/*Hub.* This is a modified Fast Ethernet 100Base FX switch or hub that can detect the optically modulated analog multiplex, and demultiplexes the analog radio signals (broadcast signals and/or mobile broadband signals) from the Ethernet data.

Once the broadcast analog radio signals have been demultiplexed, the Hybrid Switch/Hub can feed them to a TV set, and/or transmit them wirelessly in the ISM 5 GHz band (211) or/and can regenerate them in order to transmit them along a new section of the Plastic Optical Fiber plant.Also, once the mobile broadband analog radio signals have been demultiplexed, the Hybrid Switch/Hub can transmit them wirelessly in their original frequency bands, or can regenerate them in order to transmit them along a new section of the Plastic Optical Fiber plant.
Regarding the Ethernet traffic, once demultiplexed from the analog radio signals it can be treated as in any standard Ethernet hub or switch.

The output ports of the Hybrid Switch/Hub can be fed with some new analog multiplex, as a result of multiplexing the Ethernet output traffic of the Ethernet switch or hub with the regenerated analog radio signals.

### Downlink signals multiplexing and demultiplexing

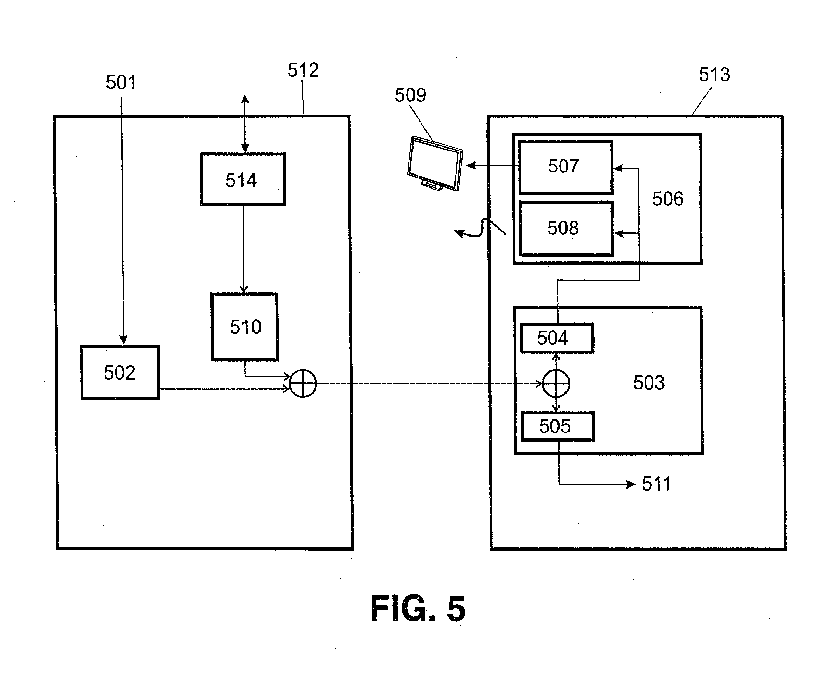

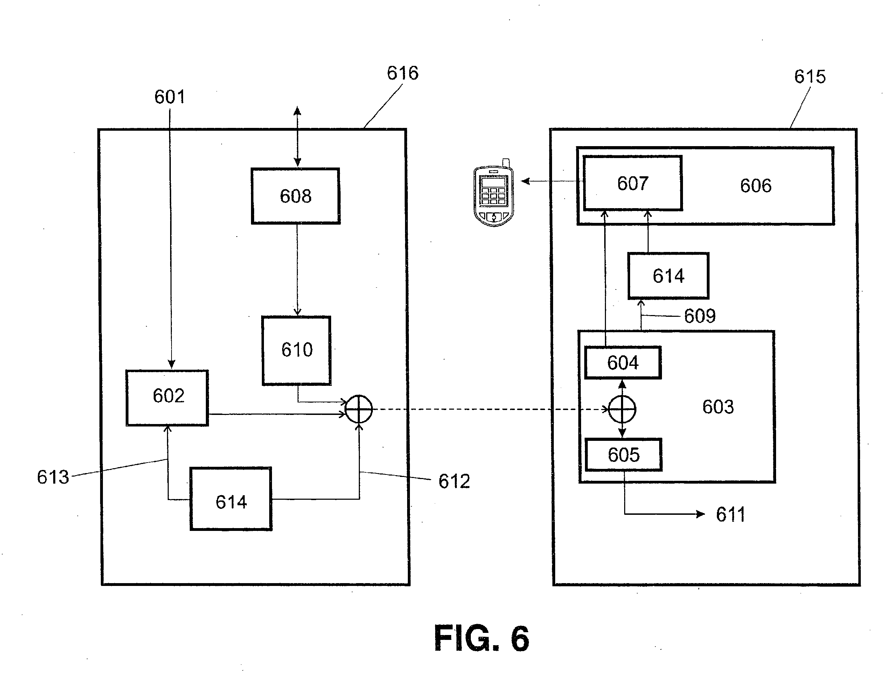

The general process of multiplexing and demultiplexing the baseband digital signal (e.g. Ethernet signal) and the broadcast signal (e.g. DVB-T signals) and/or the Mobile Broadband signals in the downlink is shown in figures 5 and 6.

The Hybrid Optical Head 512 receives a multiplex of VHF/UHF DVB-T signals and/or a multiplex of downlink Mobile Broadband signals (like HSPA or LTE).

The Ethernet signal is received in an Ethernet PHY module 514, which includes the Ethernet Physical Medium Dependent (PMD) functionality, that can be a Twisted Pair PMD (TP-PMD) or a Fiber-PMD. The output of the Ethernet PHY is an NRZI signal.

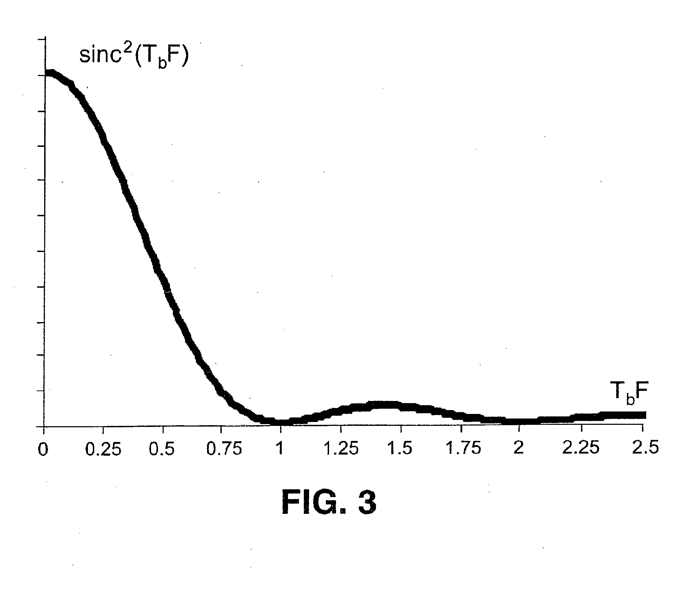

In one embodiment of this invention, the output signal of the Ethernet PHY unit is a NRZI signal with a bit rate of 125 Mbps, whose power spectrum distribution is represented in figure 3, where 1 / Tb = 125 MHz. This output signal is passed through a low pass filter in order to reduce the higher frequency spectral component. The low pass filter does not degrade the NRZI signal quality, measured as Signal to Noise ratio, if its cut-off frequency is between 0.75 * 1/Tb and 1/Tb, because a 94 % of the signal power is within 0 and 0.75 * 1/Tb, but only a 75 % of the noise power is within that frequency band.

The broadband multiplex (e.g. a VHF/UHF DVB-T multiplex) 501, and/or a downlink Mobile Broadband (like HSPA or LTE) multiplex 601 is received in an Analog Tuner module 502, 602. The Analog Tuner module selects one frequency channel (for example, one VHF/UHF DVB-T radio carrier, or one Mobile Broadband radio carrier), filters out the remaining ones, and coverts it to an intermediate frequency. There can be more than one Analog Tuner modules if more than one frequency channels must be selected simultaneously.

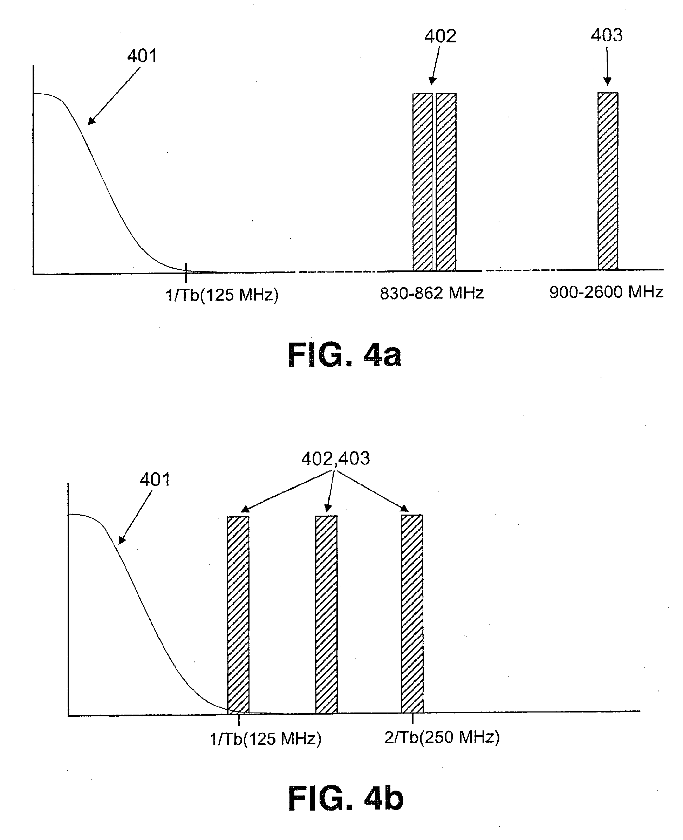

Figure 4a shows the Ethernet signal and the radiofrequency signals before any frequency conversion. In this embodiment of the invention, the low-pass filtered NRZI signal is added to the intermediate frequency output of the DVB-T tuner, creating an analog frequency multiplex as shown in figure 4b.

The analog frequency multiplex is transmitted downlink by means of the Plastic Optical Fiber and received at the demultiplexer 503 of the Hybrid Switch/Hub 513. In one embodiment of this invention, the demultiplexer comprises a two-way splitter, a high-pass filter 504 to extract the DVB-T or Mobile Broadband intermediate frequency signals, and a low pass filter 505 to extract NRZI Ethernet signal 511.

The high-passed output signal, which include all the DVB-T and/or the Mobile broadband signals at intermediate frequency, is fed to the DVB-T Output module 506 or to the MB Output module 606. In the case that the high-passed output signal is fed to the DVB-T Output module, this module can include two functionalities:
- An Analog Tuner and DVB-T decoder 507. An analog tuner is a tunable band-pass filter, that can be tuned to select one DVB-T channel at intermediate frequency. The output of the tuner is a band-passed filtered signal, that can be at the same intermediate frequency signal or converted to a new intermediate frequency signal, or to baseband. The DVB-T decoder receives the filtered signal from the tuner and decodes the MPEG Transport Streams contained in the DVB-T signal. The output of the Analog Tuner and DVB-T decoder unit is fed to a TV set 509, by means of an HDMI or an SCART standard interface.
- A 5 GHz DVB-T Transmitter 508, as described in patent application P200930549, for the indoor broadcasting of the DVB-T signal in the ISM 5 GHz band.

There are different options for the selection of the DVB-T or Mobile Broadband downlink intermediate frequency or frequencies:
- Intermediate frequency centered in 1/Tb (125 MHz in the invention's embodiment). This is the preferred embodiment of this invention, as it minimizes the total bandwidth of the analog multiplex, making it possible to use very low cost optical transmitters and receivers for Plastic Optical Fiber. In this case, the DVB-T or Mobile Broadband intermediate frequency is centered in the first NRZI power spectral null, thus minimizing the interference of the Ethernet NRZI signal on the DVB-T or Mobile Broadband signal. For illustrative purposes, but nor precluding any other implementation, a quantitative example is described.
   If the total integrated power of the NRZI Ethernet signal is arbitrarily assigned as 1, the power contents in the spectral region between 0.9 * 1/Tb and 1.1 * 1/Tb (in this embodiment of the invention, 25 MHz) is 0.002. If the NRZI Ethernet signal is passed through a low cost low pass filter 510, 610(e.g. 0-98 MHz pass band (loss < 1 dB), 3 dB cut-off frequency 108 MHz) which passes more 75 % of the power of the NRZI signal, the frequency band around 125 MHz is attenuated 10 dB. As a result of the low pass filtering, the power contents in the spectral region between 0.9 * 1/Tb and 1.1 * 1/Tb (in this embodiment of the invention, 25 MHz) is 0.0002. In order to avoid any degradation of the DVB-T or Mobile Broadband signal, this invention specifies a signal to noise ratio of the multiplexed signal of 30 dB (for example, DVB-T requires a signal to noise ratio of 27.9 dB in the worst case [9]), and thus the intermediate frequency DVB-T or Mobile Broadband signal power is 0.2 (with respect to the power assigned to the NRZI Ethernet signal, 1). In the case of the NRZI Ethernet signal, its signal to noise ratio at the Hybrid Optical Head, once it has been multiplexed with the intermediate frequency DVB-T or Mobile Broadband signal centered at 125 MHz, is 7 dB.
   At the Hybrid Switch/Hub, the analog frequency multiplex is demultiplexed by means of a demultiplexer. The demultiplexer includes a low pass filter to extract the NRZI Ethernet signal and to reject the unwanted intermediate frequency DVB-T or Mobile Broadband signals. If the same type of low cost low pass filter is used, the frequency band between 0.9 * 1/Tb and 1.1 * 1/Tb (in this embodiment of the invention, 25 MHz) is 10 dB attenuated, and thus the signal to noise ratio of the NRZI Ethernet signal will be 17 dB, enough to achieve a BER < 10⁻⁹ operation.
- DVB-T intermediate frequency centered between 1/Tb (125 MHz in the invention's embodiment) and 2/Tb (250 MHz in the invention's embodiment). In this case, the DVB-T or Mobile Broadband intermediate frequency is centered between the first and the second NRZI power spectral nulls. In this area, the interference of the Ethernet NRZI signal on the DVB-T or Mobile Broadband signal is higher than at the first null, but the interference is more easily removable by means of a low-pass filter. For illustrative purposes, but nor precluding any other implementation, a quantitative example is described.
   If the total integrated power of the NRZI Ethernet signal is arbitrarily assigned as 1, the power contents in the spectral region between 1.4 * 1/Tb and 1.6 * 1/Tb (in this embodiment of the invention, 25 MHz) is 0.018. If the NRZI Ethernet signal is passed through a low cost low pass filter (e.g. 0-98 MHz pass band (loss < 1 dB), 3 dB cut-off frequency 108 MHz) which passes more 75 % of the power of the NRZI signal, the frequency band around 187.5 MHz is attenuated 40 dB. As a result of the low pass filtering, the power contents in the spectral region between 1.4 * 1/Tb and 1.6 * 1/Tb (in this embodiment of the invention, 25 MHz) is 1.8 * 10⁻⁶. If the intermediate frequency DVB-T or Mobile Broadband signal power is 0.2 (with respect to the power assigned to the NRZI Ethernet signal, 1), then their signal to noise ratio is 50 dB (without taking into account the thermal noise) . In the case of the NRZI Ethernet signal, its signal to noise ratio at the Hybrid Optical Head, once it has been multiplexed with the intermediate frequency DVB-T or Mobile Broadband signal centered at 125 MHz, is 7 dB.
   At the Hybrid Switch/Hub, the analog frequency multiplex is demultiplexed by means of a demultiplexer. The demultiplexer includes a low pass filter to extract the NRZI Ethernet signal and to reject the unwanted intermediate frequency DVB-T or Mobile Broadband signals. If the same type of low cost low pass filter is used, the frequency band between 1.4 * 1/Tb and 1.6 * 1/Tb (in this embodiment of the invention, 25 MHz) is 40 dB attenuated, and thus the signal to noise ratio of the NRZI Ethernet signal will be 47 dB, enough to achieve a BER < 10⁻⁹ operation.
- DVB-T intermediate frequency centered in 2/Tb (250 MHz in the invention's embodiment). In this case, the DVB-T or Mobile Broadband intermediate frequency is centered in the second NRZI power spectral null. In this area, the interference of the Ethernet NRZI signal on the DVB-T or Mobile Broadband signal is lower than at the first null, and the interference is more easily removable by means of a low-pass filter, and as result better signal to noise ratios than in the last examples are achievable.

The particular case of multiplexing and demultiplexing the Ethernet signal 617 and the Mobile Broadband signals in the downlink is shown in figure 6, as an additional oscillator reference signal must be transmitted through the downlink plastic optical fiber. This oscillator reference signal (612) is used to synthesize local oscillator signals 613 at both the Hybrid Optical Head 616 and the Hybrid Switch/Hub 615 that are referenced to the same common oscillator. This is done in order to ensure that the frequency of the Mobile Broadband signal that is transmitted at the Mobile Broadband transmitter in the Hybrid Switch/Hub, is the same than the frequency of the Mobile Broadband signal at the Hybrid Optical Head Mobile Broadband input multiplex, as the usual Mobile Broadband radio interfaces require a frequency accuracy better than 10⁻⁸ for those application that are equivalent to a radio repeater.

In this embodiment of the invention the common oscillator is the Master Oscillator Reference 614, located at the Hybrid Optical Head. The Master Oscillator Reference synthesizes any Local Oscillator that could be necessary at the Analog Tuner 602 for the selection of a Mobile Broadband signal from the input multiplex and its conversion to an intermediate frequency. The Master Oscillator Reference synthesizes also an Oscillator Reference Signal that is multiplex with the low-passed Ethernet signal and the intermediate frequency Mobile Broadband signal or signals. In another embodiment of this invention, the Master Oscillator Reference can be integrated within the Analog Tuner.
The analog frequency multiplex is transmitted downlink by means of the Plastic Optical Fiber and received at the demultiplexer 603 of the Hybrid Switch/Hub. In one embodiment of this invention, the demultiplexer comprises a two-way splitter, a high-pass filter 604 to extract the Mobile Broadband intermediate frequency signals and the Oscillator Reference Signal, and a low pass filter 605 to extract NRZI Ethernet signal 611.

The high-passed output signal, which include all the Mobile broadband signals at intermediate frequency and the Oscillator Reference Signal, is fed to the the MB Output module 606.

The high-passed output signal is also fed to the Oscillator Reference module 614. In one embodiment of this invention, the Oscillator Reference module is implemented by means of a narrowband Phase Locked Loop (PLL), which synthesizes a one or more Local Oscillator signals 616 locked to the Oscillator Reference Signal 615.

The Mobile Broadband Output 606 module includes two functionalities:
- A Mobile Broadband Transmitter 617. The Mobile Broadband Transmitter takes a Mobile Broadband signal at intermediate frequency, and converts it to its original frequency band. The frequency conversion makes use of a frequency mixer and the Local Oscillator signal which is synthesized at the Oscillator Reference module. Once converted to its original frequency, the Mobile Broadband Transmitter amplifies the signal and transmits it through an antenna.
- A Mobile Broadband Receiver. The Mobile Broadband Receiver detects the uplink Mobile Broadband signals from an antenna, and converts it to an intermediate frequency. The frequency conversion makes use of a frequency mixer and the Local Oscillator signal which is synthesized at the Oscillator Reference module.. Once converted to intermediate frequency, the Mobile Broadband Transmitter amplifies the signal and feeds it to the uplink multiplexing section of the Hybrid Switch/Hub.

### Uplink signals multiplexing and demultiplexing

This section applies only to the case of Mobile Broadband signals, like HSPA or LTE, which are bi-directional in nature. No uplink multiplexing and demultiplexing process is necessary for broadcasting signals like DVB-T, that are unidirectional.

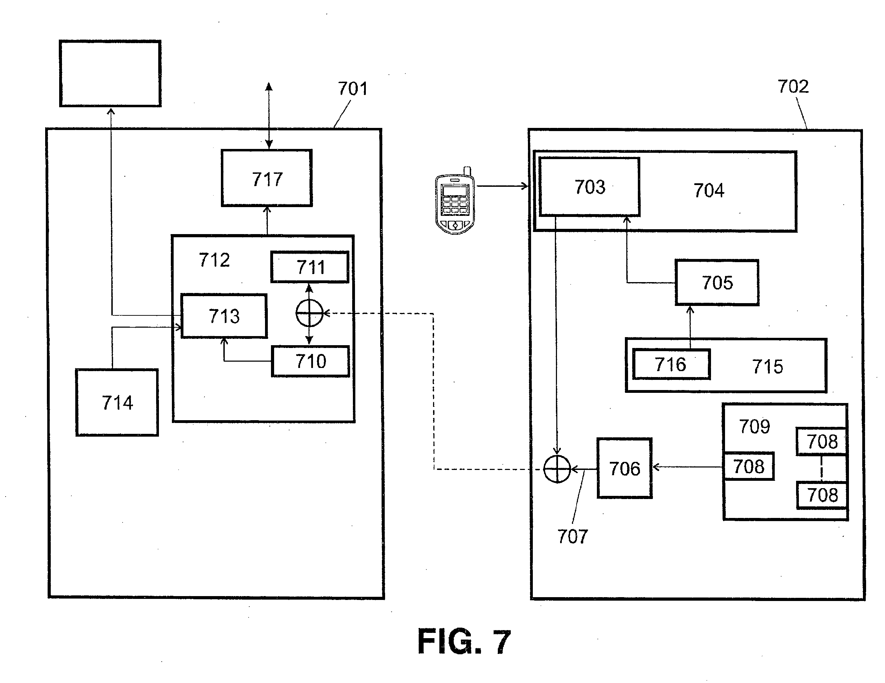

The process of multiplexing and demultiplexing the Ethernet signal and the Mobile Broadband signals in the uplink is shown in figure 7. The Hybrid Switch/Hub 702 receives an uplink Mobile Broadband signal at the Mobile Broadband Receiver 703 section of the Mobile Broadband module 704 (some examples of Mobile Broadband signals are HSPA or LTE). The uplink Mobile Broadband signal is converted to an intermediate frequency (MB Intermediate Frequency), by means of frequency mixer and the Local Oscillator signal produced by the Oscillator Reference unit 705. The output is a Mobile Broadband intermediate frequency signal, which is multiplexed with a low-passed filtered 706 uplink digital baseband signal like an Ethernet NRZI (Non return to zero inverted) signal 707. The uplink Ethernet NRZI signal is received from a PMA (Physical Medium Attachment) section (708) of the Switch/Hub unit (709) within the Hybrid Switch/Hub.

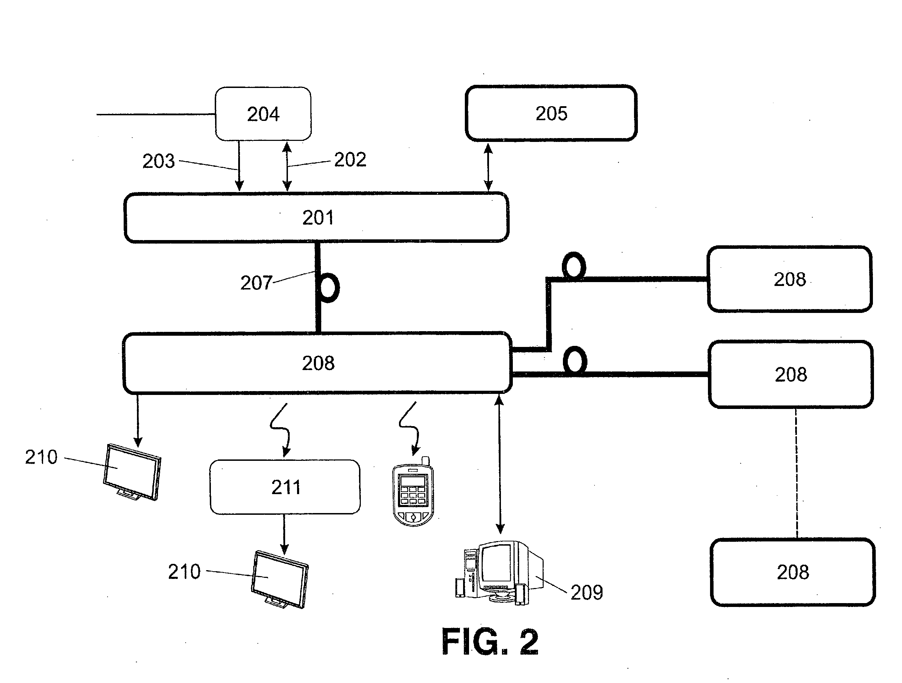

In one embodiment of this invention, the output signal of the Ethernet PHY (Physical Layer) PMA section is a NRZI signal with a bit rate of e.g 125 Mbps, whose power spectrum distribution is represented in figure 2, where 1 / Tb = 125 MHz. This output signal is passed through a low pass filter in order to reduce the higher frequency spectral component.
In this embodiment of the invention, the low-pass filtered NRZI signal is added to the intermediate frequency output of the DVB-T tuner, creating an uplink analog frequency multiplex.

The uplink analog frequency multiplex is transmitted uplink by means of the Plastic Optical Fiber and received at the demultiplexer 712 of the Hybrid Optical Head (701). In one embodiment of this invention, the demultiplexer comprises a two-way splitter, a high-pass filter 710 to extract the Mobile Broadband intermediate frequency signals, and a low pass filter 711 to extract NRZI Ethernet signal.
The high-passed output signal, which include the Mobile broadband signal at intermediate frequency, is fed to a frequency conversion unit 713. The frequency conversion unit is implemented by means of a frequency mixer, which mixes the uplink Mobile Broadband intermediate frequency with the Local Oscillator signal of the Master Oscillator unit (714). The output of the frequency conversion unit is a Mobile Broadband signal at the same frequency that the original uplink Mobile Broadband signal detected at the Hybrid Switch Hub from the user terminal.
There are different options for the selection of the Mobile Broadband uplink intermediate frequency or frequencies:
- Intermediate frequency centered in 1/Tb (125 MHz in the invention's embodiment)
- Intermediate frequency centered between 1/Tb (125 MHz in the invention's embodiment) and 2/Tb (250 MHz in the invention's embodiment).
- Intermediate frequency centered in 2/Tb (250 MHz in the invention's embodiment)

In both cases, uplink and downlink, the control of the Hybrid Optical Head 801 and the Hybrid Switch/Hubs 802 (communicated through uplink 809 and downlink 810 plastic optical fiber) is done by the user by means of a Remote Control Unit 805. The Remote Control Unit communicates with the Radio Control Modules 804 that are included in the Hybrid Optical Head and in the Hybrid Switch/Hubs.
This communication is performed by means of a radio interface. This invention does not preclude the use of any radio interface nor any radiofrequency band. In one embodiment of this invention, this radio interface is a Zigbee Remote Control Profile interface based in the standard IEEE 802.15.4, working in the ISM 2.4 GHz frequency band or in the ISM 868 MHz frequency band.

In the Hybrid Optical Head the Radio Control Module controls the Analog Tuner 803, programming the specific DVB-T radio channel or the specific Mobile Broadband radio channel that is selected and converted to an intermediate frequency. In the Hybrid Optical Head, in the case a Mobile Broadband signal is transported, the Radio Control Module could control also the uplink Frequency Demultiplexer 806, programming the specific Mobile Broadband radio channel to which the uplink Mobile Broadband intermediate frequency must be converted to.

In the Hybrid Switch/Hub the Radio Control Module controls the DVB-T Output module 807, programming the specific VHF/UHF DVB-T output frequency, or the 5 GHz DVB-T output frequency (as described in patent application P200930549), or the specific content within the DVB-T signal to be fed to the TV set through the HDMI or SCART interface. In the Hybrid Switch/Hub the Radio Control Module controls also the Mobile Broadband module 808, programming the specific Mobile Broadband radio channel to which the downlink Mobile Broadband intermediate frequency must be converted to, and programming the specific uplink Mobile Broadband intermediate frequency to which the uplink Mobile Broadband radio channel must be converted to.

The preferred embodiment of this invention comprises to a Hybrid Optical Head (that can be integrated within an ONT) and a Hybrid Switch/Hub. The term Hybrid refers to the fact that every equipment can support simultaneously Ethernet digital traffic and radio signals (broadcast radio signals and or mobile broadband signals).

A Hybrid Optical Head interfaces with an ONT and/or a Mobile Broadband unit, and interfaces with a bidirectional Plastic Optical Fiber link.

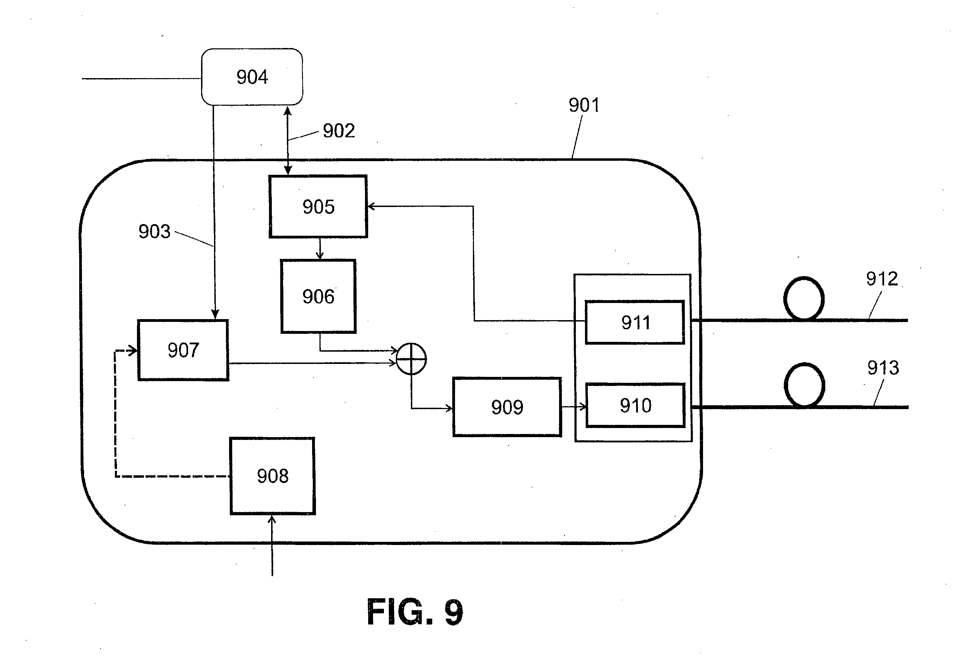

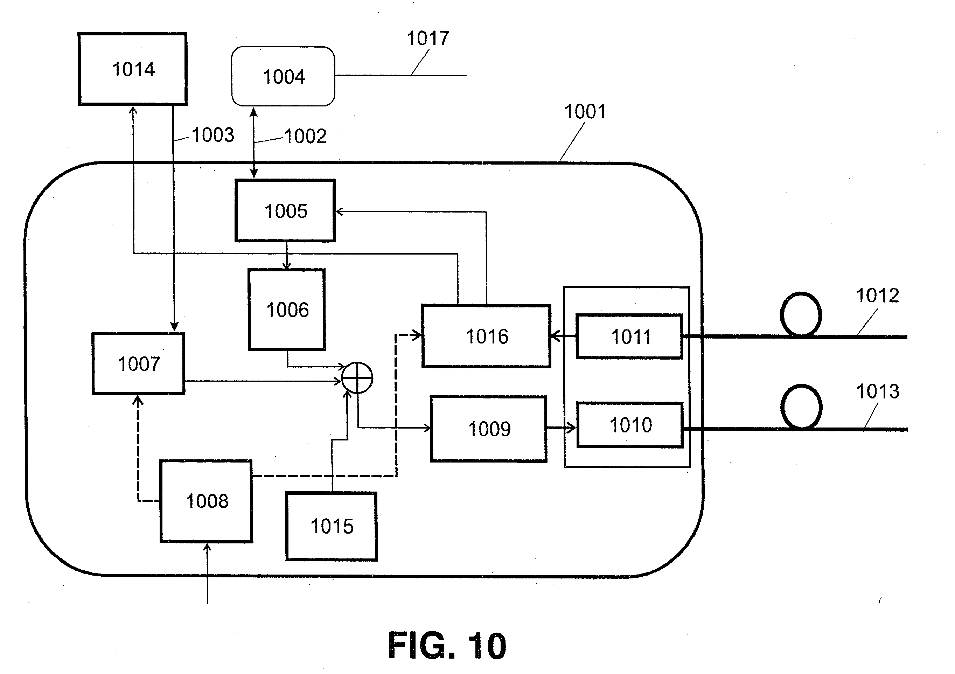

The Hybrid Optical Head can transmit Ethernet data and DVB-T, DVB-H, DVB-T2,DBV-S /VHF/UHF signals (see Fig. 9), and/or or to transmit Ethernet data and Mobile Broadband signals (see Fig. 10). The Hybrid Switch/Hub communicates with the Hybrid Optical Head through the bidirectional Plastic Optical Fiber, and with other Hybrid Switch/Hub equipment through other bidirectional Plastic Optical Fiber links. The Hybrid Switch/Hub performs Switch or Hub Ethernet standard functionalities. The Hybrid Switch/Hub also interfaces with a TV set, by means of a DVB-T Output module, and/or with a Mobile Broadband User Terminal, by means of a Mobile Broadband module.

For the case of the DVB transmission from a Hybrid Optical Head (Fig. 9), both Ethernet 902 and DVB/VHF/UHF signals 903 are supplied by the ONT 904 to the Hybrid Optical Head 901. As depicted in Figure 9, in the downlink direction, from the ONT to the Hybrid Optical Head, the "Ethernet PHY" module 905 implements the physical layer of the Ethernet standard, which includes the Ethernet Physical Medium Dependent (PMD) functionality, that can be a Twisted Pair PMD (TP-PMD) or a Fiber-PMD. The output of the Ethernet PHY is an NRZI signal, which is low pass limited with a low pass filter 906. The DVB multiplex 903 is fed to a an Analog Tuner 907, which selects a set of radio channels and transforms them to an intermediate frequency. The selection of the radio channels is controlled from a Radio Control Module 908. The NRZI Ethernet low passed filtered signals and the DVB-T intermediate frequency signals are added and injected to the Amplitude Modulator 909 that polarizes the optical transmitter 910 and transmitted through the "downlink" plastic optical fibre POF 913. In the uplink direction, Ethernet signals are detected in optical receiver 911 (received through the "uplink" plastic optical fibre 912) and delivered to the "Ethernet PHY" module to be sent to the ONT.

For the case of the Mobile Broadband transmission from a Hybrid Optical Head (Fig. 10), Ethernet signals 1002 are supplied by the ONT 1004 to the Hybrid Optical Head, and Mobile Broadband signals 1003 are delivered to the Hybrid Optical Head 1001 from a Mobile Broadband Donor unit 1014. A Mobile Broadband Donor unit is an equipment that detects the downlink radio transmission of a Mobile Broadband (for example HSPA or LTE) Public Land Mobile Network, amplifies it and delivers the amplified radio signal to the Hybrid Optical Head. In the uplink direction, a Mobile Broadband Donor unit receives uplink Mobile Broadband radio signals from the Hybrid Optical Head, amplifies them and transmits them to Mobile Broadband Public Land Mobile Network. A Mobile Broadband Donor unit is a radio repeater, which can interface with the Mobile Broadband Public Land Mobile Network radio interface by means of antennas, and with the Hybrid Optical Head by means of coaxial cables.

The Ethernet sections of the Hybrid Optical Head are the same as for the case of DVB-T distribution (that is the "Ethernet PHY" module 1005 whose output which is low pass limited with a low pass filter 1006, multiplexed with the mobile broadband signal and transmitted through the optical transmitter 1001 to the downlink plastic optical fibre 1013). In the uplink direction, the signals are detected in optical receiver 1011 (received through the "uplink" plastic optical fibre 1012).

The Hybrid Optical Head includes also an Analog Tuner 1007 that is fed with the Mobile Broadband radio signals, whose output is an intermediate frequency version of the selected input Mobile Broadband signals. The Hybrid Optical Head includes also a Master Oscillator Reference unit 1015. This module generates two oscillator signals, which are frequency locked to a common oscillator reference. One is an Oscillator Reference Signal that is added to the downlink electrical multiplexed for its downlink transmission through the POF fiber. Other is a Local Oscillator signal, which is used in the Analog Tuner and in the uplink Frequency Demultiplexer to perform frequency conversions. The Master Oscillator Reference unit is included for the transmission of Mobile Broadband signals because all the frequency conversions in both the Hybrid Optical Head and in the Hybrid Switch/Hub must share a common reference oscillator, in order to ensure that the radiated signals in the Hybrid Switch/Hub Mobile Broadband unit, and in the Mobile Broadband Donor unit, comply with the frequency accuracy specifications of the Mobile Broadband radio interfaces (0.05 ppm for HSPA or LTE). The Analog Tuner receives the Local Oscillator signal, and uses it in a mixer to convert the original Mobile Broadband signals to an intermediate frequency.

The uplink Frequency Demultiplexer 1016 receives the Local Oscillator signal, and uses it in a mixer to convert the uplink Mobile Broadband intermediate frequency signals to their original frequency.

The Hybrid Switch/Hub provides Ethernet connectivity, and/or DVB-T/UHF/VHF and/or Mobile Broadband interfaces, and can be connected to other Hybrid Switch/Hub units.

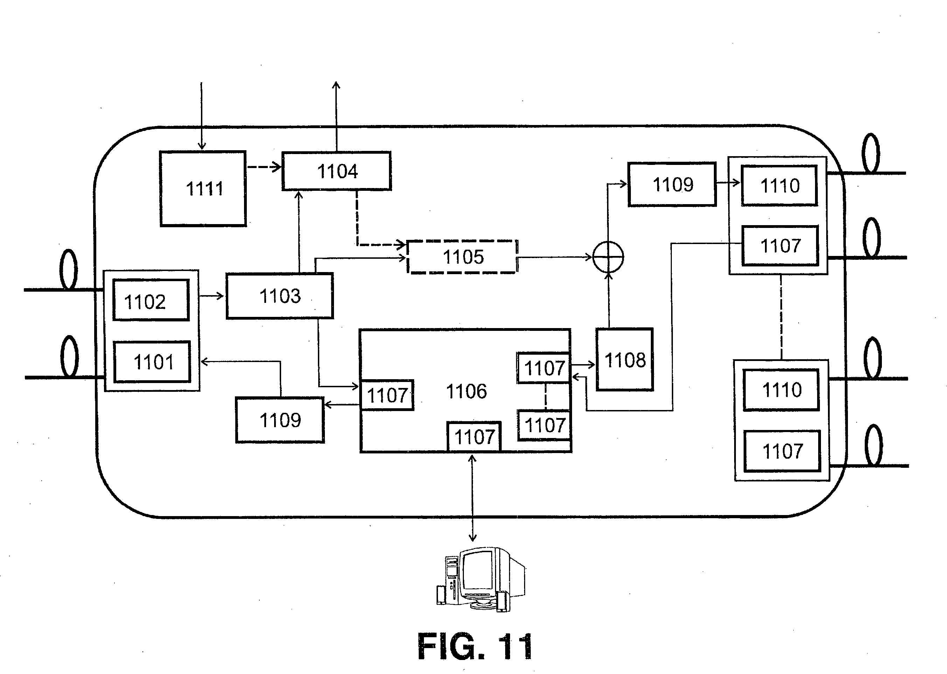

Figure 11 shows a Hybrid Switch/Hub for DVB-T. In the downlink it detects the optical signal coming from the Hybrid Optical Head through the POF fiber in an optical receiver (RX-POF 1102). A Frequency Demultiplexer 1103 separates the Ethernet signals and the DVB-T intermediate frequency signals. The downlink demultiplexed DVB-T intermediate frequency signals are injected to a DVB-T Output Module 1104 (controlled by a Radio control module 1111). This module can convert the intermediate frequency signals to the original VHF/UHF band and fed it to the radiofrequency input of a television set. This module can also convert the intermediate frequency signals to another frequency band. This module can also demodulate the DVB-T signals and communicate with a TV set through an HDMI or SCART interface. The DVB-T intermediate frequency signals can also be regenerated 1105 and added again to the DVB-T multiplex.

The downlink demultiplexed Ethernet signal is injected to the Ethernet Physical Medium Attachment 1107 section of the Ethernet Switch/Hub 1006. The output or outputs of the Ethernet Switch/Hub are filtered and added to the DVB-T intermediate frequency regenerated signals, filtered 1108, modulate in amplitude 1109 a LED or a laser (TX-POF 1110) and are transmitted by a new section of POF fiber.

Regarding the uplink section of figure 11, only Ethernet signals are received at the uplink RX-POF units 1107, which are managed by the Ethernet Switch/Hub, and transmitted to the Hybrid Optical Head by means of a single TX-POF unit 1101.

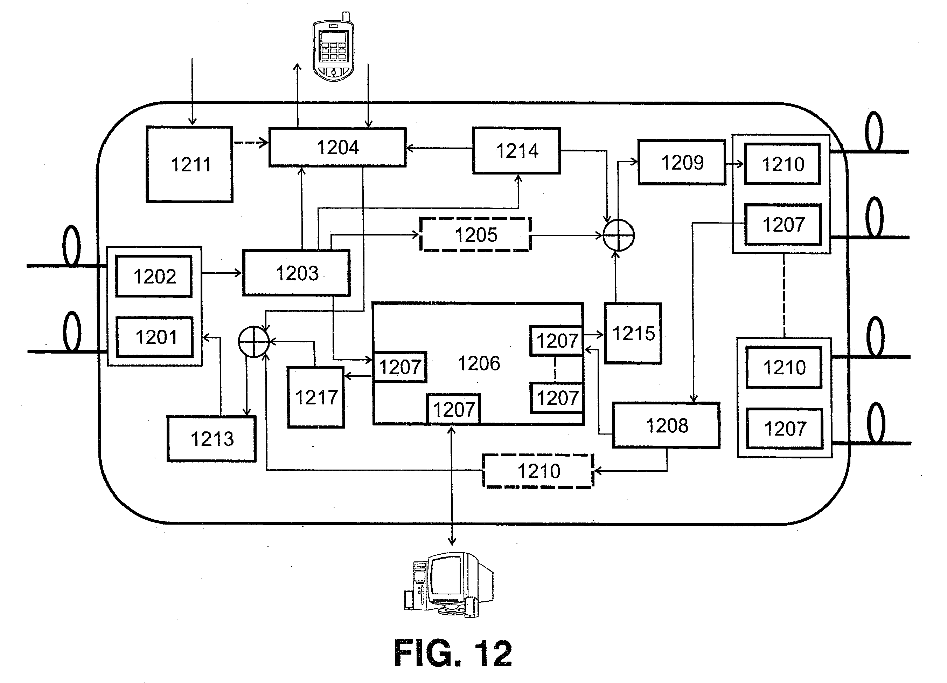

Figure 12 shows a Hybrid Switch/Hub for Mobile Broadband. In the downlink it detects the optical signal coming from the Hybrid Optical Head through the POF fiber in an optical receiver (RX-POF 1202). A Frequency Demultiplexer 1203 separates the Ethernet signals and the Mobile Broadband intermediate frequency signals. The downlink demultiplexed Mobile Broadband intermediate frequency signals are injected to a Mobile Broadband Module 1204 (optionally controlled by a Radio control module 1211). This module converts the intermediate frequency signals to the original Mobile Broadband frequency band and fed it to a transmitting antenna.

The Mobile Broadband module detects also Mobile Broadband signals transmitted by Mobile Broadband user terminals, by means of an antenna, and converts these signals to an intermediate frequency, which will be fed to the uplink section of the Hybrid Switch/Hub (1201) being previously appropriately modulated (1213). All the frequency conversions in the Mobile Broadband module make use of a Local Oscillator signal, which is synthesized in an Oscillator Reference unit 1214, which is frequency locked with the Master Oscillator Reference unit of the Hybrid Optical Head, thanks to the Oscillator Reference signal that is transmitted through the POF fiber. The Oscillator Reference unit can regenerate the Oscillator Reference signal and feed it again to the downlink multiplex.

The Mobile Broadband intermediate frequency signals can also be regenerated 1205 and added again to downlink multiplex.

The downlink demultiplexed Ethernet signal is injected to the Ethernet Physical Medium Attachment section 1207 of the Ethernet Switch/Hub 1206. The output or outputs of the Ethernet Switch/Hub are filtered 1208 and added to the Mobile Broadband intermediate frequency regenerated signals and the Oscillator Reference regenerated signal, modulate in amplitude 1209 a LED or a laser (TX-POF 1210) and are transmitted by a new section of POF fiber.

Regarding the uplink section, Ethernet signals can be received simultaneously with uplink Mobile Broadband intermediate frequency signals from other Hybrid Switch/Hubs, and detected at the uplink RX-POF units 1207. A Frequency Demultiplexer 1215 separates the Ethernet signals and the Mobile Broadband intermediate frequency signals.

The Ethernet signals are managed by the Ethernet Switch/Hub, and the Mobile Broadband intermediate frequency signals are regenerated 1216. The uplink Ethernet low passed 1217 output of the Ethernet Switch/Hub, and the regenerated uplink Mobile Broadband intermediate frequency signals, are combined in a new multiplex, which is transmitted to the Hybrid Optical Head by means of a single TX-POF unit 1201.

Although the present invention has been described with reference to specific embodiments, it should be understood by those skilled in the art that the foregoing and various other changes, omissions and additions in the form and detail thereof may be made therein without departing from the scope of the invention as defined by the following claims.

## Claims

1. A system for simultaneous indoor distribution of baseband digital signals and radiofrequency signals, the system comprising:
(i) At least a radiofrequency transmission-reception module configured for transmitting radiofrequency signals to an Optical Head Node and optionally receiving uplink radiofrequency signals from the Optical Head Node,
where the Optical Head Node called Hybrid Optical Head Node, comprises:
• At least an analog tuner (907, 1007) configured for selecting a frequency channel to filter the radiofrequency signal and converting the filtered signal to an intermediate frequency;
• A baseband digital transmission-reception module (905, 1005) configured for transmitting and receiving baseband digital signals;
• A multiplexer module configured for multiplexing the baseband digital signal and the radiofrequency signal converted to intermediate frequency by the analog tuner and sending the multiplexed signal for transmission to an optical transmitter/receiver;
• An optical transmitter/receiver configured for transmitting and receiving signals through a plastic optical fibre link;
(ii) At least a Switch/Hub node called Hybrid Switch/Hub, comprising:
• At least an optical transmitter/receiver configured for transmitting and receiving signals through a plastic optical fibre link;
• At least a radiofrequency transmission-reception module (1104, 1204) configured for transmitting and receiving the radiofrequency signals;
• A downlink regenerator (1205) configured for regenerating the radio frequency signal and sending them to a downlink multiplexer module;
• At least a downlink frequency demultiplexer (1103, 1203) configured for receiving a signal from an optical receiver (1102, 1202), separating the baseband digital from the radiofrequency signal and sending the baseband digital signals to the baseband digital transmission-reception module (1106, 1206) and the radiofrequency signals to the radiofrequency transmission-reception module respectively (1104, 1204) or to the downlink regenerator (1105, 1205);
• A baseband digital transmission-reception module (1006, 1206) configured for transmitting and receiving baseband digital signals, and for receiving the baseband digital signal from the frequency demultiplexer and sending them to a baseband digital terminal or to the downlink multiplexer module;
• A downlink addition module configured for multiplexing the baseband digital signal and the regenerated radiofrequency signals and sending them to an optical transmitter (1210) for transmission to another Hybrid Switch/Hub,
the system further comprising a multimode plastic optical fibre network which connects the Hybrid Optical Head Node with an Hybrid Switch/Hub and an Hybrid Switch/Hub with the Hybrid Optical Head Node or with another Hybrid Switch/Hub.

2. A system according to claim 1 further comprising:
In the Hybrid Swtich/Hub, an uplink frequency demultiplexer (1016) configured for receiving signals from an optical receiver (1011), separating the baseband digital signal from the radiofrequency signal, sending the radiofrequency signal to an uplink regenerator (1210) and sending the baseband digital signals to the baseband digital transmission-reception module,
where the baseband digital transmission-reception module (1206) is further configured to receive the signals from the uplink frequency demultiplexer and sending them to an uplink multiplexer module;
In the Hybrid Swtich/Hub, an uplink regenerator (1210) configured for regenerating the radio frequency signals and sending them to an uplink multiplexer module.
In the Hybrid Swtich/Hub, an uplink multiplexer module configured for adding the baseband digital signals to the regenerated radiofrequency signal and sending the signals to an optical transmitter (1201) for transmission to the hybrid optical node;
In the Hybrid Optical Head, a frequency demultiplexer (1016) which receives signals from the optical receiver (1011), separate the baseband digital signal from the radiofrequency signal, converts the radiofrequency signals to their original frequency and sends the baseband digital signals to the baseband digital transmission-reception module and the broadband transmission-reception module respectively for transmission.

3. A system according to claims 1 or 2, where the baseband digital signals are Ethernet signals.

4. A system according to any of previous claims 1 to 3, where the radiofrequency signals are digital TV broadcast signals as DBV-T or DVB-H, DVB-T2 or DVB-S signals or any other type of radio broadcast signals.

5. A system according to any of previous claims 1 to 4, where the radiofrequency signals are UMTS, LTE or HSPA signals or any other type of mobile broadband signals.

6. The system according to any of previous claims where the baseband digital signal output by the baseband digital transmission-reception module is low pass filtered before being sent to another module.

7. The system according to any of previous claims where baseband digital signal is an Ethernet Non Return to Zero Inverted NRZI signal with a bit rate Tb, being Tb a design parameter.

8. The system according to claim 7 where the intermediate frequency used is 1/Tb.

9. The system according to claim 7 where the intermediate frequency used is between 1/Tb and 2/Tb.

10. The system according to claim 7 where the intermediate frequency used is 2/Tb.

11. The system according to any of previous claims 7-10 where Tb=125 Mbps.

12. The system according to claim 5 further comprising in the Hybrid Optical Head, a master oscillator reference configured for generating an oscillator reference signal, synthesizing from this oscillator reference signal, the Local Oscillator Signals to be used by the analog tuner for processing the radiofrequency signals and giving to the multiplexer module said oscillator reference signal;
and where the multiplexer module is further configured for multiplexing oscillator reference signal with the baseband digital signal and the radiofrequency signal to be sent by the optical transmitter/receiver;
and where, in the Hybrid Switch/Hub the donlwink demultiplexer is further configured for separating the oscillator reference signal and giving it to an oscillator reference module (1214), this oscillator reference module is configured for giving the oscillator reference signal to the radiofrequency transmission/reception module to be used for the radiofrequency signals processing and giving it as well to the downlink multiplexer module for transmission to another Hybrid Switch/Hub.

13. The system according to of the previous claims, the system further comprising:
A first radio control module situated in the Hybrid Optical Head configured for controlling the analog tuner by programming the specific radio channel of the radiofrequency signal that is selected and converted to an intermediate frequency;
A second radio control module situated in the Hybrid Optical Head configured for controlling the radiofrequency transmission/reception module by programming the output frequency to which the downlink radiofrequency intermediate frequency signal must be converted,
where the first and second radio control modules are controlled by a remote control unit communicated with the radio control modules through a radio interface.

14. A system according to any previous claims where the plastic fiber is a Polymethyl methacrylate PMMA plastic fiber.

15. A system according to any previous claims where the hybrid optical head is part of an Optical Network Termination ONT.

16. A system according to any previous claims 1-15 where hybrid optical head receives the baseband digital signals and the radiofrequency signals from an Optical Network Termination ONT.

## Patentansprüche

1. Ein System für eine simultane Innenverteilung von digitalen Basisbandsignalen und Radiofrequenzsignalen, das System umfasst:
(i) mindestens ein Radiofrequenzsendeempfangsmodul, das dafür eingerichtet ist, Radiofrequenzsignale zu einem optischen Hauptknoten zu senden und optional Uplink-Radiofrequenzsignale von dem optischen Hauptknoten zu empfangen,
wobei der optische Hauptknoten, genannt Hybrid Optical Head, umfasst:
• mindestens einen Analogtuner (907, 1007), der dazu eingerichtet ist, einen Frequenzkanal auszuwählen, um das Radiofrequenzsignal zu filtern, und das gefilterte Signal auf eine Zwischenfrequenz zu konvertieren;
• ein digitales Basisbandsendeempfangsmodul (905, 1005), das dazu eingerichtet ist, digitale Basisbandsignale zu senden und zu empfangen;
• ein Multiplexermodul, das dafür eingerichtet ist, das digitale Basisbandsignal und das Radiofrequenzsignal, das durch den Analogtuner auf eine Zwischenfrequenz konvertiert wurde, zu multiplexen und das Mehrkanal-Signal zur Übertragung an einen optischen Sender/Empfänger zu senden;
• einen optischen Sender/Empfänger, der dafür eingerichtet ist, Signale über ein optisches Kunststofffaser-Verbindungsglied zu übertragen und zu empfangen;
(ii) mindestens einen Switch/Hubknoten genannten Hybrid Switch/Hub, umfassend:
• mindestens einen optischen Sender/Empfänger, der dafür eingerichtet ist, Signale über ein optisches Kunststofffaser-Verbindungsglied zu senden und zu empfangen;
• mindestens ein Radiofrequenzsendeempfangsmodul (1104, 1204), das dafür eingerichtet ist, Radiofrequenzsignale zu senden und zu empfangen;
• einen Downlink-Regenerator (1205), der dafür eingerichtet ist, Radiofrequenzsignale zu regenerieren und diese an ein Downlink-Multiplexermodul zu senden;
• mindestens einen Downlink-Frequenzdemultiplexer (1103, 1203), der dafür eingerichtet ist, ein Signal von einem optischen Empfänger (1102, 1202) zu erhalten, das digitale Basisband von dem Radiofrequenzsignal zu trennen und die digitalen Basisbandsignale zu dem digitalen Basisbandsendeempfangsmodul (1106, 1206) bzw. die Radiofrequenzsignale zu dem Radiofrequenzsendeempfangsmodul (1104, 1204) oder zu dem Downlink-Regenerator (1105, 1205) zu senden;
• ein digitales Basisbandsendeempfangsmodul (1106, 1206), das dafür eingerichtet ist, digitale Basisbandsignale zu senden und zu empfangen, und dafür, das digitale Basisbandsignal von dem Frequenzdemultiplexer zu empfangen und sie an einen digitalen Basisbandendpunkt oder an das Downlink-Multiplexermodul zu senden;
• ein Downlink-Zusatzmodul, das dafür eingerichtet ist, das digitale Basisbandsignal und die regenerierten Radiofrequenzsignale zu multiplexen und sie an einen optischen Sender (1210) für die Übertragung an einen anderen Hybrid Switch/Hub zu senden,
das System weist weiter ein optisches Multimode-Kunststofffasernetzwerk auf, welches den Hybrid Optical Head mit einem Hybrid Switch/Hub und einen Hybrid Switch/Hub mit dem Hybrid Optical Head oder einem anderen Hybrid Switch/Hub verbindet.

2. Ein System nach Anspruch 1 weiter aufweisend:
in dem Hybrid Switch/Hub einen Uplink-Frequenzdemultiplexer (1016), der dafür eingerichtet ist, Signale von einem optischen Empfänger (1011) zu erhalten,
welche das digitale Basisbandsignal vom Radiofrequenzsignal separieren, das Radiofrequenzsignal an einen Uplink-Regenerator (1210) zu senden und die digitalen Basisbandsignale an das digitale Basisbandsendeempfangsmodul zu senden,
wobei das digitale Basisbandsendeempfangsmodul (1206) weiter dafür eingerichtet ist, die Signale von dem Uplink-Frequenzdemultiplexer zu empfangen und sie an ein Uplink-Multiplexermodul zu senden;
in dem Hybrid Switch/Hub einen Uplink-Regenerator (1210), der dafür eingerichtet ist, Radiofrequenzsignale zu regenerieren und sie an ein Uplink-multiplexermodul zu senden;
in dem Hybrid Switch/Hub ein Uplink-Multiplexermodul, das dafür eingerichtet ist, die digitalen Basisbandsignale zu dem regenerierten Radiofrequenzsignal hinzuzufügen und die Signale an einen optischen Sender (1201) für die Übertragung an den Hybrid Optical Head zu senden;
in dem Hybrid Optical Head einen Frequenzdemultiplexer (1016), der Signale von dem optischen Empfänger (1011) erhält, das digitale Basisbandsignal von dem Radiofrequenzsignal separiert, die Radiofrequenzsignale in ihre Ursprungsfrequenz konvertiert und die digitalen Basisbandsignale zur Übertragung an die digitalen Basisbandsendeempfangsmodule bzw. die Breitbandsendeempfangsmodule sendet.

3. Ein System nach den Ansprüchen 1 oder 2, wobei die digitalen Basisbandsignale Ethernet-Signale sind.

4. Ein System nach einem der vorhergehenden Ansprüche 1 bis 3, wobei die Radiofrequenzsignale digitale TV-Signale wie DBV-T- oder DVB-H-, DVB-T2- oder DVB-S-Signale oder jeden anderen Typ von Rundfunksignalen darstellen.

5. Ein System nach einem der vorhergehenden Ansprüche 1 bis 4, wobei die Radiofrequenzsignale UMTS-, LTE- oder HSPA-Signale oder jeden anderen Typ von Breitbandmobilfunksignalen darstellen.

6. Das System nach einem der vorhergehenden Ansprüche, wobei das digitale Basisbandausgangssignal durch das digitale Basisbandsendeempfangsmodul tiefpassgefiltert wird, bevor es an ein anderes Modul gesendet wird.

7. Das System nach einem der vorhergehenden Ansprüche, wobei das digitale Basisbandsignal ein Ethernet Non Return to Zero Inverted NRZI-Signal mit einer Bitrate Tb ist, wobei Tb ein Designparameter darstellt.

8. Das System nach Anspruch 7, wobei die verwendete Zwischenfrequenz 1/Tb ist.

9. Das System nach Anspruch 7, wobei die verwendete Zwischenfrequenz zwischen 1/Tb und 2/Tb liegt.

10. Das System nach Anspruch 7, wobei die verwendete Zwischenfrequenz 2/Tb ist.

11. Das System nach einem der vorhergehenden Ansprüche 7 bis 10, wobei Tb = 125 Mbps.

12. Das System nach Anspruch 5, weiter aufweisend in dem Hybrid Optical Head, eine Masteroszillatorreferenz, welche zur Erzeugung eines Oszillatorreferenzsignals eingerichtet ist, wobei von diesem Oszillatorreferenzsignal die Local Oscillator Signals zur Nutzung durch den Analogtuner für die Aufbereitung der Radiofrequenzsignale und die Übermittlung des Oszillatorreferenzsignal an den Multiplexermodul synthetisiert werden;
und wobei das Multiplexermodul weiter dafür eingerichtet ist, das Oszillatorreferenzsignal mit dem digitalen Basisbandsignal und dem Radiofrequenzsignal zu multiplexen, um es durch den optischen Sender/Empfänger zu senden;
und wobei in dem Hybrid Switch/Hub der Downlink-Demultiplexer weiter dafür eingerichtet ist, das Oszillatorreferenzsignal zu separieren und es an ein Oszillatorreferenzmodul (1214) weiterzuleiten, dieses Oszillatorreferenzmodul ist dafür eingerichtet, das Oszillatorreferenzsignal an das Radiofrequenzsendeempfangsmodul zur Nutzung für die Aufarbeitung der Radiofrequenzsignale und auch die Weiterleitung an das Downlink-Multiplexermodul für die Übertragung an ein anderes Hybrid Switch/Hub weiterzuleiten.

13. Das System nach einem der vorhergehenden Ansprüche, das System weiter aufweisend:
ein erstes Funksteuermodul, das im Hybrid Optical Head angeordnet und dafür eingerichtet ist, den Analogtuner durch Programmierung des spezifischen Funkkanals des Radiofrequenzsignals zu steuern, das ausgewählt und in eine Zwischenfrequenz umgewandelt wird;
ein zweites Funksteuermodul, das im Hybrid Optical Head angeordnet und dafür eingerichtet ist, das Radiofrequenzübertragungsempfangsmodul durch Programmierung der Ausgangsfrequenz zu steuern, in welche das Downlink-Radiofrequenz-Zwischenfrequenzsignal konvertiert werden muss,
wobei das erste und zweite Funksteuermodul durch eine Fernbedienungseinheit gesteuert werden, welche mit den Funksteuermodulen über eine Funkschnittstelle kommuniziert.

14. Ein System nach einem der vorhergehenden Ansprüche, wobei die Kunststofffaser eine Polymethylmethacrylat PMMA Kunststofffaser darstellt.

15. Ein System nach einem der vorhergehenden Ansprüche, wobei der Hybrid Optical Head Teil eines Optical Network Termination ONT ist.

16. Ein System nach einem der vorhergehenden Ansprüche 1 bis 15, wobei der Hybrid Optical Head die digitalen Basisbandsignale und die Radiofrequenzsignale von einem Optical Network Termination ONT erhält.

## Revendications

1. Système pour la distribution intérieure simultanée de signaux numériques en bande de base et de signaux radiofréquence, le système comprenant :
(i) au moins un module d'émission-réception radiofréquence configuré pour émettre des signaux radiofréquence à un Noeud de Tête Optique et recevoir éventuellement des signaux radiofréquence de liaison montante en provenance du Noeud de Tête Optique,
où le Noeud de Tête Optique appelé Noeud de Tête Optique Hybride, comprend :
▪ au moins un syntoniseur analogique (907, 1007) configuré pour sélectionner un canal de fréquence pour filtrer le signal radiofréquence et convertir le signal filtré à une fréquence intermédiaire ;
▪ un module d'émission-réception numérique en bande de base (905, 1005) configuré pour émettre et recevoir des signaux numériques en bande de base ;
▪ un module multiplexeur configuré pour multiplexer le signal numérique en bande de base et le signal radiofréquence converti à la fréquence intermédiaire par le syntoniseur analogique et envoyer le signal multiplexé pour l'émission vers un émetteur/récepteur optique ;
▪ un émetteur/récepteur optique configuré pour émettre et recevoir des signaux par l'intermédiaire d'une liaison par fibres optiques de plastique ;
(ii) au moins un noeud de Commutateur/Concentrateur appelé Commutateur/Concentrateur Hybride, comprenant :
▪ au moins un émetteur/récepteur optique configuré pour émettre et recevoir des signaux par l'intermédiaire d'une liaison par fibres optiques de plastique ;
▪ au moins un module d'émission-réception radiofréquence (1104, 1204) configuré pour émettre et recevoir les signaux radiofréquence ;
▪ un régénérateur de liaison descendante (1205) configuré pour régénérer le signal radiofréquence et l'envoyer à un module multiplexeur de liaison descendante ;
▪ au moins un démultiplexeur de fréquence de liaison descendante (1103, 1203) configuré pour recevoir un signal en provenance d'un récepteur optique (1102, 1202), séparer le signal numérique en bande de base du signal radiofréquence et envoyer les signaux numériques en bande de base au module d'émission-réception numérique en bande de base (1106, 1206) et les signaux radiofréquence au module d'émission-réception radiofréquence respectivement (1104, 1204) ou au régénérateur de liaison descendante (1105, 1205) ;
▪ un module d'émission-réception numérique en bande de base (1006, 1206) configuré pour émettre et recevoir des signaux numériques en bande de base, et pour recevoir le signal numérique en bande de base en provenance du démultiplexeur de fréquence et l'envoyer à un terminal numérique en bande de base ou au module multiplexeur de liaison descendante ;
▪ un module d'addition de liaison descendante configuré pour multiplexer le signal numérique en bande de base et les signaux radiofréquence régénérés et les envoyer à un émetteur optique (1210) pour l'émission vers un autre Commutateur/Concentrateur Hybride,
le système comprenant en outre un réseau à fibres optiques de plastique multimodes qui connecte le Noeud de Tête Optique Hybride avec un Commutateur/Concentrateur Hybride et un Commutateur/Concentrateur Hybride avec le Noeud de Tête Optique Hybride ou avec un autre Commutateur/Concentrateur Hybride.

2. Système selon la revendication 1, comprenant en outre :
dans le Commutateur/Concentrateur Hybride, un démultiplexeur de fréquence de liaison montante (1016) configuré pour recevoir des signaux en provenance d'un récepteur optique (1011), séparer le signal numérique en bande de base du signal radiofréquence, envoyer le signal radiofréquence à un régénérateur de liaison montante (1210) et envoyer les signaux numériques en bande de base au module d'émission-réception numérique en bande de base,
où le module d'émission-réception numérique en bande de base (1206) est en outre configuré pour recevoir les signaux en provenance du démultiplexeur de fréquence de liaison montante et les envoyer à un module multiplexeur de liaison montante ;
dans le Commutateur/Concentrateur Hybride, un régénérateur de liaison montante (1210) configuré pour régénérer les signaux radiofréquence et les envoyer à un module multiplexeur de liaison montante ;
dans le Commutateur/Concentrateur Hybride, un module multiplexeur de liaison montante configuré pour ajouter les signaux numériques en bande de base au signal radiofréquence régénéré et envoyer les signaux à un émetteur optique (1201) pour l'émission vers le noeud optique hybride ;
dans le Noeud Optique Hybride, un démultiplexeur de fréquence (1016) qui reçoit des signaux en provenance du récepteur optique (1011), sépare le signal numérique en bande de base du signal radiofréquence, convertit les signaux radiofréquence à leur fréquence d'origine et envoie les signaux numériques en bande de base au module d'émission-réception numérique en bande de base et au module d'émission-réception à large bande respectivement pour l'émission.

3. Système selon la revendication 1 ou 2, où les signaux numériques en bande de base sont des signaux Ethernet.

4. Système selon l'une quelconque des revendications 1 à 3 précédentes, où les signaux radiofréquence sont des signaux de diffusion TV numériques tels que des signaux DVB-T ou DVB-H, DVB-T2 ou DVB-S ou tout autre type de signaux de radiodiffusion.

5. Système selon l'une quelconque des revendications 1 à 4 précédentes, où les signaux radiofréquence sont des signaux UMTS, LTE ou HSPA ou tout autre type de signaux à large bande mobiles.

6. Système selon l'une quelconque des revendications précédentes, où le signal numérique en bande de base sorti par le module d'émission-réception numérique en bande de base fait l'objet d'un filtrage passe-bas avant d'être envoyé à un autre module.

7. Système selon l'une quelconque des revendications précédentes, où le signal numérique en bande de base est un signal Ethernet de non-retour à zéro inversé NRZI avec un débit binaire Tb, Tb étant un paramètre de conception.

8. Système selon la revendication 7, où la fréquence intermédiaire utilisée est 1/Tb.

9. Système selon la revendication 7, où la fréquence intermédiaire utilisée est comprise entre 1/Tb et 2/Tb.

10. Système selon la revendication 7, où la fréquence intermédiaire utilisée est 2/Tb.

11. Système selon l'une quelconque des revendications 7 à 10 précédentes, où Tb = 125 Mbps.

12. Système selon la revendication 5, comprenant en outre dans la Tête Optique Hybride, une référence de maître-oscillateur configurée pour générer un signal de référence d'oscillateur, synthétiser à partir de ce signal de référence d'oscillateur, les Signaux d'Oscillateur Local devant être utilisés par le syntoniseur analogique pour traiter les signaux radiofréquence et donner au module multiplexeur ledit signal de référence d'oscillateur ;
et où le module multiplexeur est en outre configuré pour multiplexer le signal de référence d'oscillateur avec le signal numérique en bande de base et le signal radiofréquence devant être envoyés par l'émetteur/récepteur optique ;
et où, dans le Commutateur/Concentrateur Hybride le démultiplexeur de liaison descendante est en outre configuré pour séparer le signal de référence d'oscillateur et le donner à un module de référence d'oscillateur (1214), ce module de référence d'oscillateur est configuré pour donner le signal de référence d'oscillateur au module d'émission/réception radiofréquence pour être utilisé pour le traitement des signaux radiofréquence et le donner également au module multiplexeur de liaison descendante pour l'émission vers un autre Commutateur/Concentrateur Hybride.

13. Système selon l'une quelconque des revendications précédentes, le système comprenant en outre :
un premier module de commande radio situé dans la Tête Optique Hybride configuré pour commander le syntoniseur analogique en programmant le canal radio spécifique du signal radiofréquence qui est sélectionné et converti à une fréquence intermédiaire ;
un second module de commande radio situé dans la Tête Optique Hybride configuré pour commander le module d'émission/réception radiofréquence en programmant la fréquence de sortie à laquelle le signal de fréquence intermédiaire radiofréquence de liaison descendante doit être converti,
où les premier et second modules de commande radio sont commandés par une unité de commande à distance en communication avec les modules de commande radio par l'intermédiaire d'une interface radio.

14. Système selon l'une quelconque des revendications précédentes, où la fibre de plastique est une fibre de plastique polyméthacrylate de méthyle PMMA.

15. Système selon l'une quelconque des revendications précédentes, où la tête optique hybride fait partie d'une Terminaison de Réseau Optique ONT.

16. Système selon l'une quelconque des revendications 1 à 15 précédentes, où la tête optique hybride reçoit les signaux numériques en bande de base et les signaux radiofréquence en provenance d'une Terminaison de Réseau Optique ONT.
